# DEMANDE DE BREVET EUROPEEN

(11) **EP 2 196 369 A1**
(43) Date de publication de la demande: **16.06.2010**
(21) Numéro de dépôt: 09177191.5
(22) Date de dépôt: 26.11.2009
(51) Int. Cl.: B60T 8/40, B60T 17/02, B60T 17/04, F16L 35/00, F16L 37/084, F16L 37/28

(54) **Source de dépression**

(30) Priorité: 11.12.2008 FR 0858484
(71) Demandeur: Peugeot Citroën Automobiles SA, 78140 Vélizy-Villacoublay (FR)
(72) Inventeur: Pitaud, Bernard, 37170, CHAMBRAY-LES-TOURS (FR)
(74) Mandataire: Ménès, Catherine

(57) **Abrégé**

L'invention concerne une source de dépression pour la commande d'au moins un actionneur, applicable à un véhicule automobile, la source comprenant au moins deux raccords (1, 2) pour pouvoir la relier à au moins un actionneur.

L'invention concerne également un dispositif pour obturer un passage de fluide gazeux, par exemple un raccord non utilisé de la source de dépression, le dispositif comprenant un embout (2) avec des premiers moyens d'encliquetage (21) et un élément d'obturation (8) destiné à être placé et retenu sur l'embout (2), l'élément d'obturation (8) comprenant des seconds moyens d'encliquetage (81) destinés à coopérer avec les premiers moyens d'encliquetage (21) pour retenir l'élément d'obturation (8) sur l'embout (2).

## Description

La présente invention concerne une source de dépression pour la commande d'au moins un actionneur dans un véhicule automobile, ainsi qu'un dispositif pour obturer un passage de fluide gazeux dont est pourvue, par exemple, une telle source de dépression.

Dans le domaine de l'automobile, on utilise depuis longtemps déjà le vide, ou plus précisément une dépression, pour l'assistance au freinage. La dépression est générée soit par une pompe à vide entraînée par le moteur du véhicule ou par le moteur lui-même. Or, les constructeurs d'automobiles se sont aperçus que le vide pourrait être utilisé aussi pour la commande de certains actionneurs intervenant dans le fonctionnement du moteur. Pour répondre à ce nouveau besoin, des distributeurs de vide au moyen de connexions multiples ont été développés, comme en témoigne par exemple le document FR-A-2-901 343. Toutefois, en raison de la multitude de variantes d'équipement proposées ou nécessaires pour les différents modèles de véhicules automobiles, une gamme assez importante de types de raccords multiples est nécessaire pour subvenir à ces besoins.

Le but de l'invention est de proposer une solution simple pour remédier aux inconvénients exposés ci avant.

Le but de l'invention est atteint avec une source de dépression pour la commande d'un ou de plusieurs actionneurs.

Conformément à l'invention, la source de dépression comprend au moins deux raccords permettant de la relier à au moins un actionneur.

Les mérites de la présente invention consistent en la conception d'une source de dépression ayant au moins deux raccords, ce principe incluant la possibilité de ne pas utiliser systématiquement tous les raccords et d'en obturer de manière étanche celui (ou ceux) qui n'est pas (ou ne sont) pas utilisé(s) dans une application donnée.

Pour cette raison, le but de la présente invention est également atteint avec un dispositif pour obturer un passage de flux gazeux comme par exemple un raccord d'une source de dépression selon l'invention, qui n'est pas systématiquement utilisé.

En effet, lorsqu'une source de dépression est développée par exemple pour différents modèles de véhicules automobiles, pour différentes variantes d'un même modèle de véhicule ou pour des applications telles la commande de la suralimentation de différents moteurs thermiques, non exclusivement en application automobile, les raccords d'une telle source de dépression ne sont pas systématiquement tous utilisés. Et puisque l'absence d'utilisation de raccords entraînerait une fuite de la source de dépression, il est judicieux de prévoir autant d'obturateurs que de raccords susceptibles de ne pas être utilisés dans certaines applications.

Par ailleurs, le compromis qui devait être trouvé entre un montage et/ou démontage rapide et un raccord sûr a fait opter pour un bouchon encliquetable pour obturer les passages ou raccords non utilisés.

Dans la réalisation la plus simple, au moins un des raccords d'une source de dépression selon l'invention comprend un embout ayant des premiers moyens d'encliquetage et, de manière complémentaire, le dispositif pour obturer un passage de fluide gazeux ou un tel raccord d'une source de dépression comprend des seconds moyens d'encliquetage destinés à coopérer avec les premiers moyens d'encliquetage pour retenir l'élément d'obturation sur l'embout.

Avantageusement, mais nullement nécessairement, tous les raccords d'une source de dépression selon l'invention comprennent un embout ayant des premiers moyens d'encliquetage et étant conformé pour pouvoir coopérer avec des dispositifs d'obturation et des connecteurs comprenant des seconds moyens d'encliquetage destinés à coopérer avec les premiers moyens d'encliquetage.

Selon un mode de réalisation particulier de l'invention, l'embout comporte une collerette formant les premiers moyens d'encliquetage et l'élément d'obturation comprends une partie creuse destinée à coiffer l'embout pour obturer le passage de fluide de manière étanche, la partie creuse comportant les seconds moyens d'encliquetage.

D'autres caractéristiques et avantages de la présente invention ressortiront de la description d'un mode de réalisation ci-après de l'invention. La description est faite en référence aux dessins dans lesquels :
- la figure 1 représente, en une vue en perspective, une source de dépression utilisable dans le domaine de l'automobile et comportant deux raccords, et
- la figure 2 représente un élément d'obturation selon l'invention en regard d'un embout approprié.

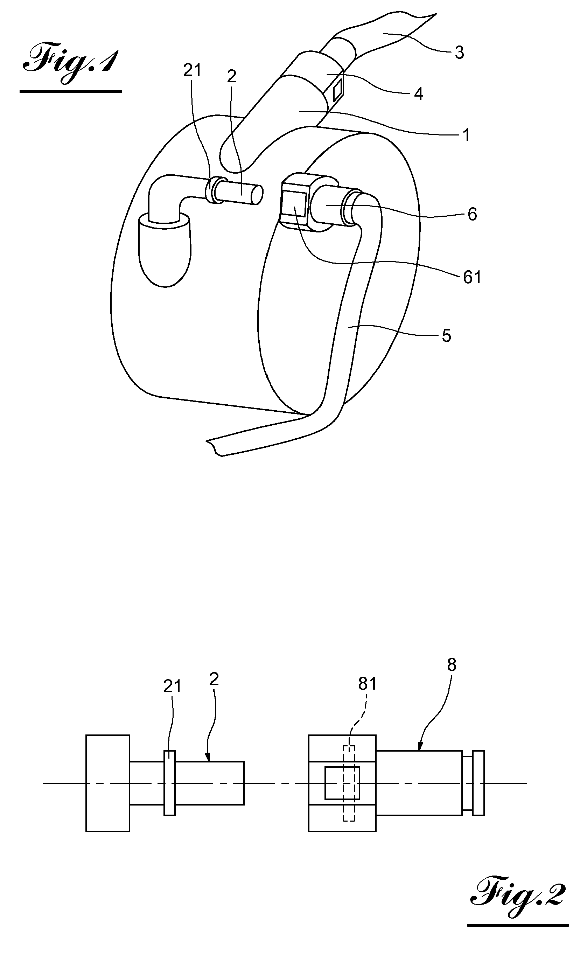

La figure 1 représente une pompe à réserve de vide utilisable dans le domaine automobile. Cette pompe comporte un premier raccord 1 pour un dispositif d'assistance de freinage, ce dispositif étant relié à la pompe moyennant un conduit 3 pourvu d'un connecteur 4.

La pompe comprend par ailleurs un second raccord 2 pour y raccorder un dispositif de commande par exemple pour commander une vanne de recirculation des gaz d'échappement d'un moteur thermique ou la commande d'un dispositif de suralimentation ou de doseurs d'un tel moteur ou bien d'autres dispositifs susceptibles d'être commandés moyennant une dépression.

Le raccordement optionnel d'un second dispositif de commande au raccord 2 moyennant un conduit 5 pourvu d'un connecteur 6 est schématisé sur la figure 1 par une représentation axialement espacée du connecteur 6 par rapport au raccord 2.

Bien que la figure 1 représente une pompe avec deux raccords seulement, il va sans dire que, sans sortir du principe de la présente invention, une source de dépression selon l'invention peut aussi avoir trois ou encore davantage de raccords. La figure 1 n'a donc aucun caractère limitatif.

Lorsque le raccord 2 n'est pas utilisé, il est obturé de manière étanche moyennant un dispositif d'obturation encliquetable représenté schématiquement sur la figure 2.

En effet, selon le mode de réalisation représenté dans les dessins, au moins le ou les raccords supplémentaires en dehors du raccord servant au branchement du dispositif d'assistance au freinage, sont formés par des embouts pourvus d'une collerette 21 destinée à coopérer avec des moyens complémentaires d'encliquetage 81 disposés dans un bouchon 8 selon la figure 2, formant obturateur et dans des connecteurs 6 selon la figure 1.

Ainsi, grâce aux premiers moyens d'encliquetage 21 de l'embout 2, et éventuellement aussi de l'embout 1, et aux seconds moyens d'encliquetage 81 respectivement du bouchon 8 et du connecteur 6, le cas échéant aussi du connecteur 4, un montage et/ou démontage rapide et un raccord sûr sont possibles avec des moyens simples, et cela aussi bien pour le raccordement d'un actionneur à une source de dépression selon l'invention que pour l'obturation étanche d'un raccord non utilisé d'une telle source. Pour le démontage, mais éventuellement aussi pour le montage, d'un bouchon 8 ou d'un connecteur 6 et/ou 4, les seconds moyens d'encliquetage sont actionnés par des éléments d'actionnement 61 visibles sur la figure 1 sur le connecteur 6.

Cette disposition de l'invention présente l'avantage d'un engagement et d'un désengagement respectivement d'un connecteur 4 ou 6 ou d'un bouchon 8 en direction axiale par rapport à l'embout 2 ainsi qu'un bruit d'encliquetage confirmant acoustiquement à l'opérateur l'engagement des seconds moyens d'encliquetage avec les premiers. De plus, des moyens d'obturation, tout comme les moyens de connexion par encliquetage permettent d'obtenir une liaison forte, mais en même temps facile à ouvrir et cela avec un effort ne nécessitant pas l'intervention d'outillage. La force employée pour déconnecter le raccordement au raccord 2 est de l'ordre de 4daN.

## Revendications

1. Source de dépression pour la commande d'au moins un actionneur, applicable à un véhicule automobile, **caractérisée en ce qu'**elle comprend au moins deux raccords (1, 2) pour pouvoir la relier à au moins un actionneur.

2. Source selon la revendication 1, **caractérisée en ce que** l'un au moins des raccords (2) est formé de manière que le ou les raccords (2) non utilisés puissent être obturés avec un élément d'obturation encliquetable.

3. Source selon la revendication 2, **caractérisée en ce que** le ou les raccords susceptibles de rester non utilisés comportent un embout (2) pourvu de premiers moyens d'encliquetage (21) et **en ce que** l'élément d'obturation (8) comprend des seconds moyens d'encliquetage (81) destinés à coopérer avec les premiers moyens d'encliquetage (21) pour retenir l'élément d'obturation (8) sur l'embout (2).

4. Source selon la revendication 3, **caractérisé en ce que en ce que** l'embout (2) comporte une collerette (21) formant les premiers moyens d'encliquetage et **en ce que** l'élément d'obturation (8) comprends une partie creuse destinée à coiffer l'embout (2) pour obturer le passage de fluide, la partie creuse comportant les seconds moyens d'encliquetage (81).
